# EUROPEAN PATENT APPLICATION

(11) **EP 2 991 058 A1**
(43) Date of publication of application: **02.03.2016**
(21) Application number: 14182662.8
(22) Date of filing: 28.08.2014
(51) Int. Cl.: G09B 23/28

(54) **Thorax simulator**

(71) Applicant: Les Hôpitaux Universitaires de Genève, 1205 Geneva (CH)
(72) Inventor: The designation of the inventor has not yet been filed
(74) Representative: reuteler & cie SA

(57) **Abstract**

The present invention relates to a thorax simulation device (4) comprising a base (16), an air containing system (6) containing a volume of air, an air transfer system (7) and tactile feedback actuation system (8) comprising a movable actuating member (36) and a reciprocating arrangement (14). The actuating member is operationally coupled to the air containing system by a chamber actuating mechanism (42) configured to change the air volume within the air containing system as a function of the displacement of the actuating member. The reciprocating arrangement comprises a traction mechanism (52) configured to apply a traction force on the actuating member, and a compression mechanism (54) configured to apply a compression force on the actuating member, the compression force and traction force acting in opposite directions.

## Description

### TECHNICAL FIELD

The present invention relates to an artificial thorax device. An artificial thorax device may be used inter alia for simulating induced ventilation during CPR stimulation. An artificial thorax device can either be integrated into a mannequin device for training purposes, or be configured for performance testing of medical devices such as CPR machines.

### BACKGROUND OF THE INVENTION

Providing adequate lung ventilation is often critical in life-saving situations. Sudden cardiac arrest remains a leading cause of death in the Western world, and chances for survival significantly increase if the patient is given a correct Cardiopulmonary resuscitation (CPR).

Specific training is necessary in order to learn how to perform a CPR correctly. Typically, CPR involves chest compressions of a certain force to a depth of at least 5 cm deep and at a rate of at least 100 per minute. The CPR may also be combined with exhaling into the person's mouth of using a mechanical ventilation device. In order to facilitate the CPR, mechanical devices have been developed, which eliminates the need for manual compressions. Instead, a belt with an integrated and moveable push plate performs rhythmic impulses to a patient's chest. An example of such a system is brought to the market by the company Physiocontrol under the name "Lucas".

If the compressions are not performed in a correct way, the consequences can be that the CPR is not successful and the patient can end up with a broken rib. If the CPR is successful, an artificial blood circulation is created by manually pumping blood through the heart and the body. The chest compressions also have an indirect influence as they induce ventilation by the chest movements. The way a CPR should be performed may vary depending on the pathological state of the patient. The pathological state can depend on many factors, such as lung volume of the individual and the thorax berating resistance. For instance, the lung ventilation requirement may be dependent on gender, age, and with certain physiological/pathological differences (such as for instance a punctured lung or asymmetric lung capacity).

However, the physiological state and influence from lung ventilation during a cardiac arrest is not widely explored. In fact, clinical studies are limited by the urgency in the situation and due to ethical circumstances. Additionally, there is a need to test the performance of manual as well as mechanical CPR's.

### SUMMARY OF THE INVENTION

An object of the invention is to provide a device which provides a model of a human thorax and lung compartment to accurately simulate the dynamics during induced chest movements.

It would be advantageous to provide a thorax simulation device which can simulate dynamics of different pathological states.

It would be advantageous to provide a thorax simulation device that can be easily integrated into a training device.

It would be advantageous to provide a thorax simulation device that can used for evaluating medical devices for CPR.

It would be advantageous to provide a thorax simulation device that is robust reliable and compact.

Disclosed herein is a thorax simulation device comprising a base, an air containing system containing a volume of air, an air transfer system and a tactile feedback actuation system comprising a movable actuating member and a reciprocating arrangement. The actuating member is operationally coupled to the air containing system by a chamber actuating mechanism configured to change the air volume within the air containing system as a function of the displacement of the actuating member.

According to a first aspect of the invention, the reciprocating arrangement comprises a traction mechanism configured to apply a traction force on the actuating member, and a compression mechanism configured to apply a compression force on the actuating member, the compression force and traction force acting in opposite directions.

According to a second aspect of the invention, the air transfer system comprises an air entry conduit comprising a tubular member with a collapsible flexible wall portion configured to produce a variable restricted air flow into the air containing system to simulate collapse of the upper respiratory tract during inhalation.

According to an advantageous embodiment, the traction mechanism comprises a traction spring and a traction regulation mechanism configured to adjust the force of the traction spring.

According to an advantageous embodiment, the traction regulation mechanism comprises a mounting flange comprising a complementary guide rail slidably coupled to a guide rail of a mounting column of the base.

According to an advantageous embodiment, the compression mechanism comprises a gas piston.

According to an advantageous embodiment, the compression mechanism is configured to dampen the reciprocating movement of the actuating member.

According to an advantageous embodiment, the compression mechanism comprises a compression force regulating mechanism, configured to adjust the compression force of the compression mechanism.

According to an advantageous embodiment, the compression force regulating mechanism may comprise a compressed gas supply connected to the gas piston.

According to an advantageous embodiment, the air containing system includes at least two variable volume air chambers arranged in a first group and a second group.

According to an advantageous embodiment, the first and second group each comprise at least two variable volume air chambers.

According to an advantageous embodiment, the first group may be positioned on a right side, and the second group on a left side.

The chamber actuating mechanism may comprise a rest volume adjustment mechanism configured to vary a volume of the air chambers when the air chambers are at rest.

According to an advantageous embodiment, the rest volume adjustment mechanism comprises a movement transferring plate, an extension and a movable adjustment member. According to an advantageous embodiment, the moveable adjustment member is an adjustment screw, preferably arranged to be operational from the outside of the thorax simulation device.

According to an advantageous embodiment, the moveable adjustment member is connected to an actuator which is configured to automatically displace the adjustment member.

Also disclosed herein is a test mannequin comprising a thorax simulation device as described above.

### BRIEF DESCRIPTION OF THE DRAWINGS

For a better understanding of the invention, and to show how embodiments of the same may be carried into effect, reference will now be made, by way of example, to the accompanying diagrammatic drawings in which:
Figure 1 is a perspective, partly cut-away view of a thorax simulation device located inside a mannequin according to an embodiment of the invention;
Figure 2 is a perspective view of a first side of a thorax simulation device according to an embodiment of the invention;
Figure 3 is a perspective view of a second side of a thorax simulation device according to an embodiment of the invention;
Figure 4 is an exploded view in perspective of the thorax simulation device of figures 1-3;
Figure 5 is a cross-sectional view of the thorax simulation device of figures 1-4;

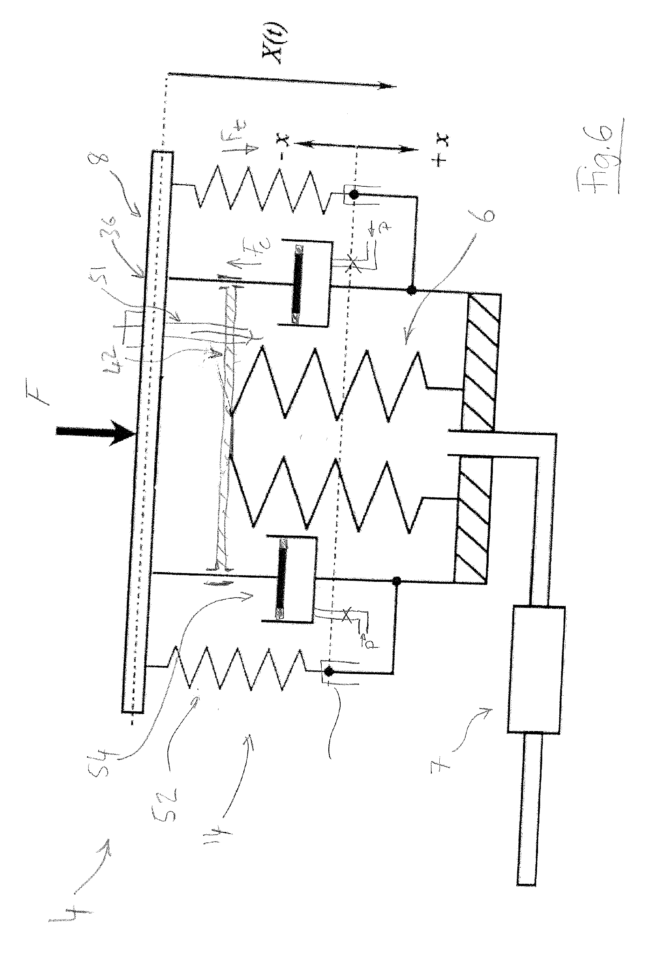

Figures 6 is a schematic cross sectional view of a thorax simulation device according to an embodiment of the present invention;

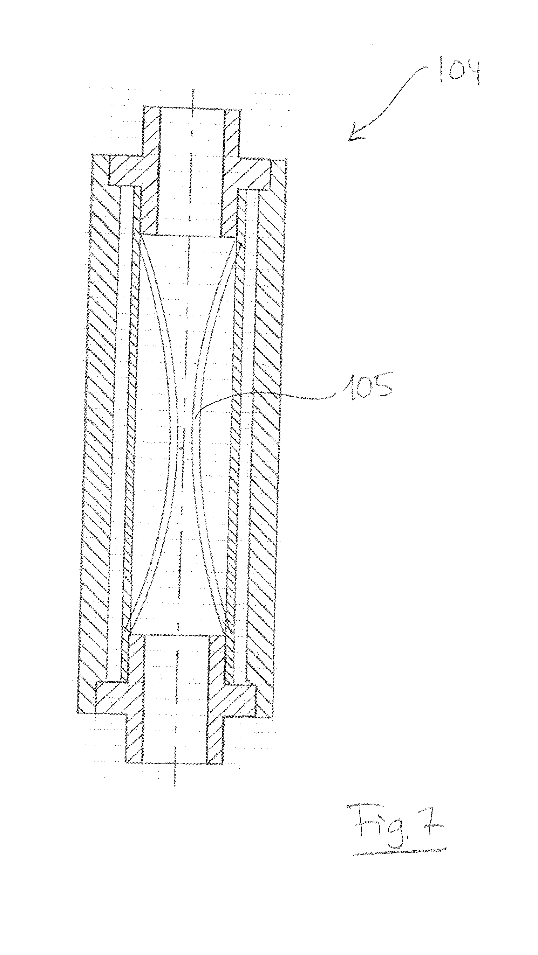

Figure 7 is a schematic cross sectional view of an air entry conduit of a thorax simulation device according to an embodiment of the invention.

### DETAILED DESCRIPTION OF EXEMPLARY EMBODIMENTS

Referring to the figures, a thorax simulation device 4 according to an exemplary embodiment of the present invention comprises an air containing system 6, an air transfer system 7 and tactile feedback actuation system 8.

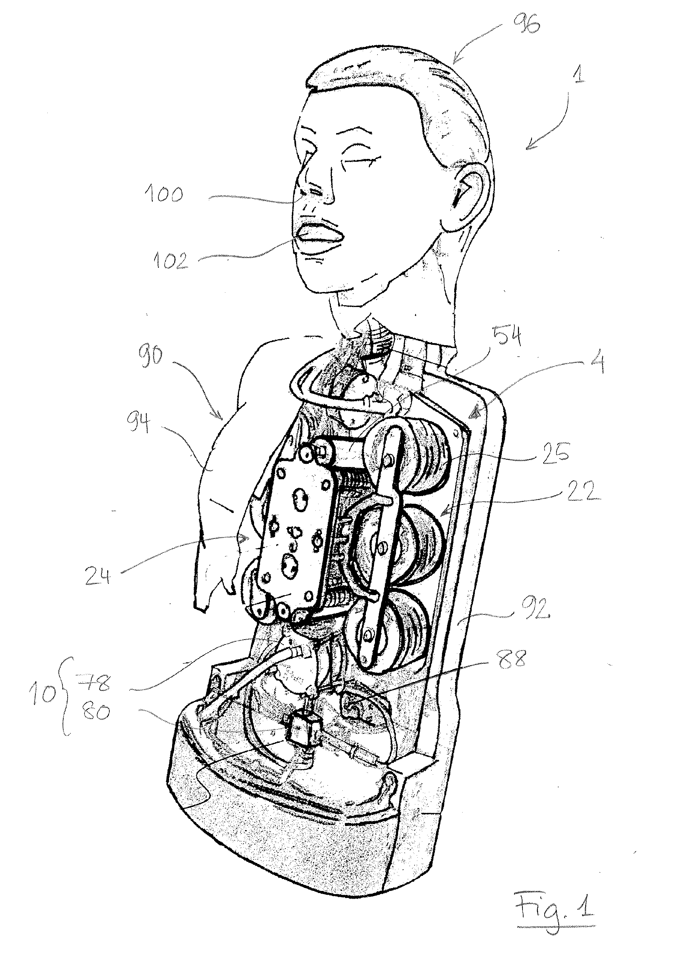

As illustrated in figure 1, in an embodiment of the present invention, the thorax simulation device 4 may be arranged inside a mannequin 1. The mannequin may be used for CPR training or for testing of CPR devices. As illustrated in figure 1, the mannequin 1 may comprise an external envelope 90 having a rigid or semi-rigid casing 92 and a flexible artificial tissue 94 representing the skin of a person. The mannequin may also be provided with a head 96 having a nose 100 and a mouth 102 in order to realistically simulate the airways of a person.

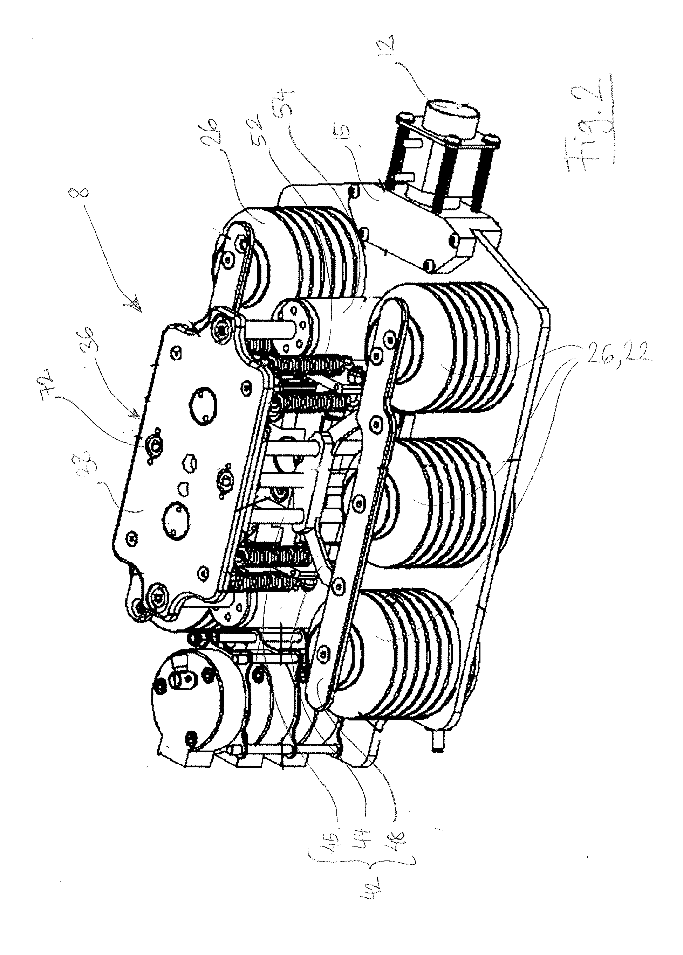

According to a preferred embodiment, the air containing system 6 comprises a first group of air chambers 22 and a second group of air chambers 24 representing the lung volume of a person. When the thorax simulation device 4 is mounted into a mannequin, the first group of air chambers 22 and the second group of air chambers 24 are located respectively on the left side and the right side of the position of the sternum (thorax center). As best illustrated in figure 2, the first group of chambers 22 and the second group of chambers 24 may each be composed of a subset of air chambers 25. Preferably, the number of air chambers at least two in each group of air chambers 22, 24. However, in an exemplary (non-illustrated) embodiment, there may be only one air chamber 25 in the first group of air chambers 22 and a second group of air chambers. In another exemplary (non-illustrated) embodiment, there may be only one air chamber 25, centrally located within the thorax simulation device 4. The air chambers 25 are compressible, and are configured to contain a variable air volume when inflated and deflated. Suitably, the air chambers 25 are configured as compressible bellows and have a cylinder shape with a variable length. The longitudinal side wall of the air chamber 25 can have a corrugated structure (for instance a folded zig-zag structure) such that the length of the wall can be changed and the volume inside the air chamber 25 changed. When the thorax simulation device 4 is in use, air is inhaled and expelled to and from the air chamber 25 from the air transfer system 7.

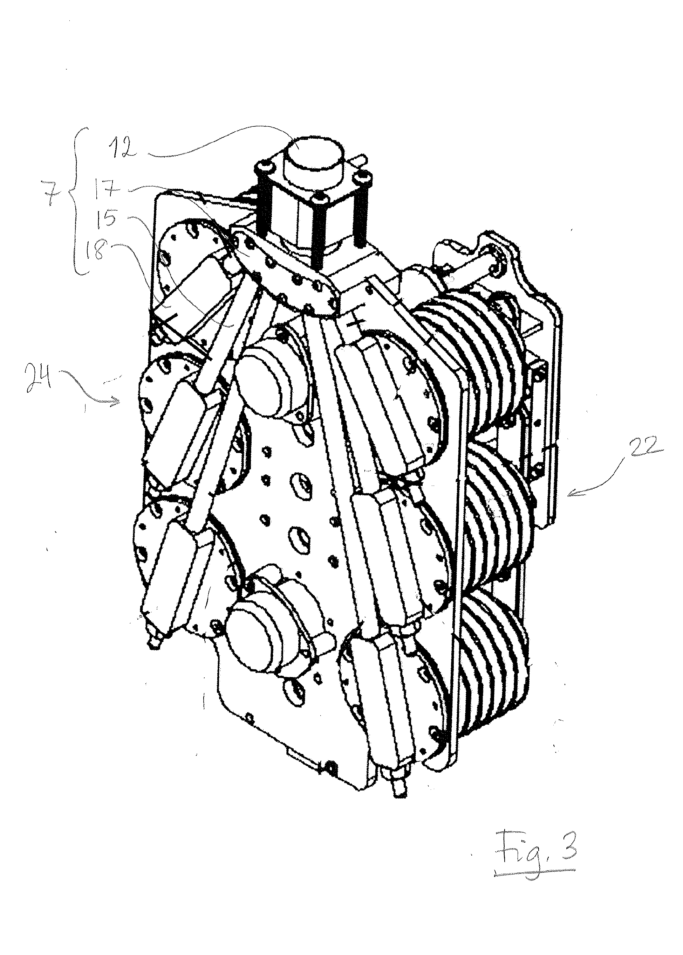

As best seen in figure 3, the air transfer system 7 comprises an orifice 12, supply conduits 15 and a branching connection 17. However, in an embodiment (not illustrated) there may only be one supply conduit and the branching connection max be excluded. The orifice 12 acts as both inlet and outlet to and from the air chambers in similarity to the airways of a person. The orifice 12 can be an end-orifice that is open to the surrounding air or connected to an air supply conduit. Alternatively, in a preferred embodiment, the orifice 12 is connected to an extension conduit in the shape of an air entry conduit 104. The air entry conduit 104 is a flexible tubular member 105 configured to produce a variable restricted air flow depending on the level of inclination of the air entry conduit 104. The level of inclination represents the head of a person as it is inclined. For instance, this tube is configured vibrate such that wall portions inner circumference partially and occasionally adhere, resulting in an obstructed air movement when inhaling. The air entry conduit 104 is thus capable of simulating a natural behavior of a patient's vibratory collapse of the upper respiratory tract during inhalation. The air entry conduit 104 may comprise a thin and flexible material, such as silicon or rubber. The air entry conduit 104 may also be provided with an adhesive coating in order to further enhance the adhesion of the inner wall portions of the air entry conduit 104.

As illustrated in figure 3, when the air containing system 6 comprises several air chambers 25, the orifice 12 is connected to a branching connection 17, which divides the inlet flow into several supply conduits 15, where each supply conduit 15 is connected to a chamber unit 25. The connection between the air chambers 25 and the supply conduit 15 may be provided with a removable connector cap 18.

The air transfer system may further comprise an air transfer channel system 34, comprising individual channels 35 connected to the air chambers and optionally to a measuring arrangement 80, which may be configured to measure the air flow and pressure.

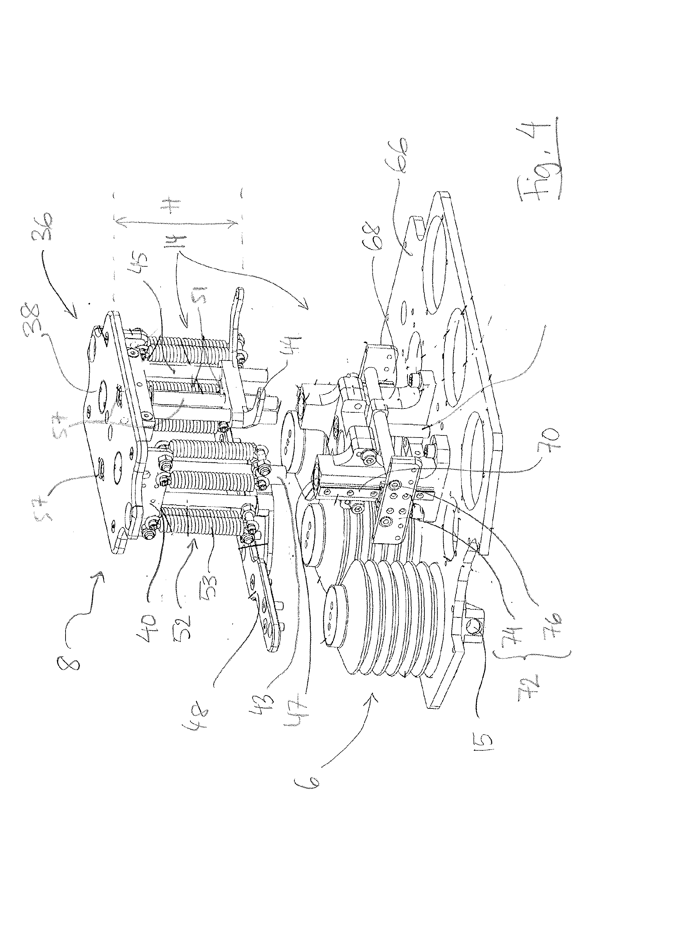

The air containing system 6 is operationally connected to the tactile feedback actuation system 8, which is configured to both actuate (i.e. deflate and inflate) the air chambers and to provide a tactical feedback to the operator. As best illustrated in figures 2 and 4, the feedback actuation system 8 comprises an actuating member 36, a base 16 and a reciprocating arrangement 14 arranged in-between the actuating member 36 and the base 16.

The actuating member 36 comprises a contact plate 38, a first mounting flange 40, a guide member 43, a chamber actuating mechanism 42. The actuating member 36 is linearly moveable between an equilibrium position *Pe* and a fully compressed position *Pc* in response to an impulse or an applied force *Fa* from an operator or a CPR device. The equilibrium position Pe represents the thorax position in an uncompressed state, without any applied force *Fa*, and the fully compressed position Pc represents the maximum compression possible of the thorax. The linear movement of the actuating member 36 is perpendicular to the surface of the contact plate 38. When the thorax simulation device 4 is arranged inside a mannequin, the contact plate 38 is arranged in essentially parallel to the outer surface of the thorax of the mannequin.

The chamber actuating mechanism 42 comprises a chamber interconnecting bar 48 arranged on an extension 41 of the actuating member 36. Each side of the device - the left side and the right side - comprises a chamber actuating mechanism. In an advantageous embodiment the chamber actuating mechanisms are independently adjustable, thus allowing the rest volume of the first group of chambers and second group of air chambers to be different. This for instance may be used to calibrate the device, or to introduce different settings on the left and right sides to simulate asymmetric physiological situations.

A chamber actuation mechanism 42 is coupled to the extension 41. The chamber actuation mechanism 42 is configured to compress and pull up the air chambers when a force F is applied to the actuating member 36. Conversely, when no pressure is applied to the actuating member 36, the chambers relax to contain their volume setting at rest. The chamber actuating mechanism comprises a rest volume adjustment mechanism 51 configured to vary a volume of the air chambers when the air chambers are at rest. The rest volume adjustment mechanism comprises a movement transfer plate 44 threadably coupled to an adjustment screw 57 that can be turned to adjust the distance of the movement transfer plate 44 from the contact plate 38. The movement transfer plate 44 comprises extensions 45 that are fixedly connected to a chamber interconnecting bar 48 that extend across the plurality of air chambers 25 on each of the sides of the device. The

The base 16 and the actuating member 36 are provided with reciprocating guide members 43, 47, such that the actuating member 36 is linearly moveable along a predetermined path in relation to the base 16. The base 16 comprises a mounting column 68 which is fixedly connected to a base plate 66. The base plate may advantageously be provided with fastening means such as fasteners or apertures for mounting the thorax simulation device 4 inside a mannequin 1. The mounting column 68 comprises the guide member 47 which as illustrated in figure 4 may be in the shape of a socket.

The reciprocating arrangement 14 is arranged in-between the actuating member 36 and the base 16. The reciprocating arrangement 14 comprises a traction mechanism 52 and a compression mechanism, whereby the traction mechanism 52 and the compression mechanism 54 are configured to counter-act each other.

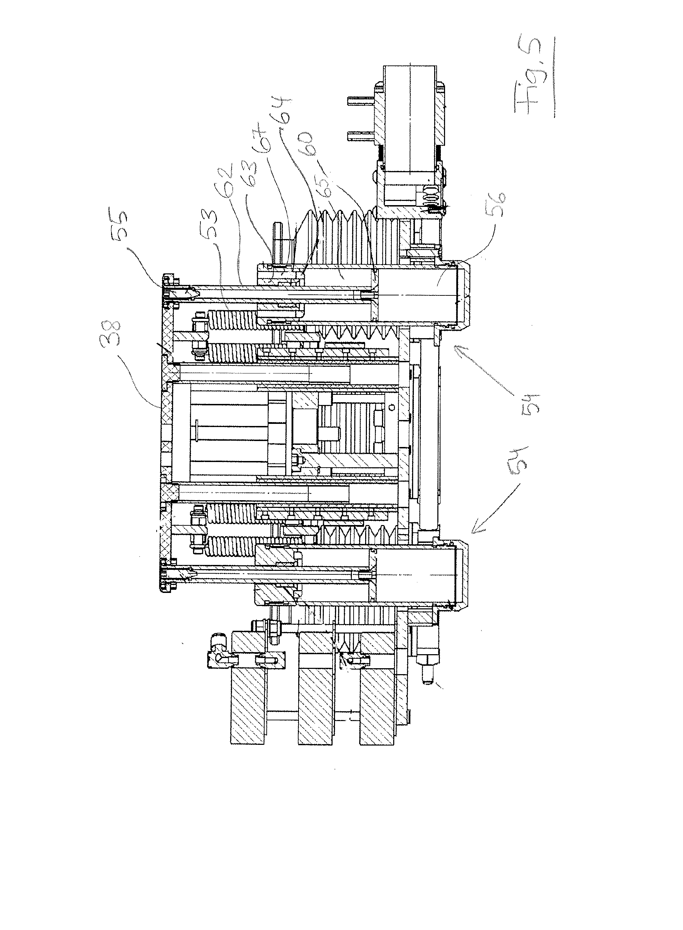

The compression mechanism 54 is configured to produce a resistance to the operator when pressing against the actuating member 36. Specifically, the human chest deflects quite linearly with increasing force during compression, but deflects with less force than was required to compress it. Preferably, the compression mechanism is therefore provided with an internal dampening mechanism. As best seen in figures 2 and 5, the compression mechanism is preferably fixedly mounted at one end to the base 16 or the base plate 66 and the other end is fixedly mounted to the actuating member 36.

As best illustrated in figures 2 and 5, the compression mechanism may advantageously be a gas spring comprising a piston chamber 56 fixedly connected to the base 16, a moveable piston head 60 and a piston rod 62 connected to the piston head 60 and to the actuating member 36. A compression force regulating mechanism may comprise a gas supply connected to the gas piston via a valve, configured to pump gas into, respectively release gas out of the gas piston to vary the pressure in the gas piston. The gas pump and valve may be controlled by the control and measuring mechanism 10. A pressure sensor configured to measure the pressure of the gas in the gas piston may be connected to the control and measuring system. A piston guiding member 63 surrounds the piston rod in order to provide a guide for the reciprocating movement of the piston head. Preferably, the guide member is provided with a resilient end stop 64 which dampens the impact in the end position of the cylinder head, i.e. in the extended position. The piston guiding member 63 and/or the piston head 60 may be configured to impart a certain damping factor on the piston movement by virtue of the friction between a sealing ring on the piston head and the piston chamber wall, and/or between the piston guiding member 63 and the piston rod. A damping factor may also be provided by means of a restricted airflow passage 67 in a chamber 65 between the piston head and the piston guiding member 63. The restricted airflow passage may in a variant be provided with a variable valve or other airflow restriction adjustment to vary the airflow resistance and thereby the damping factor.

The traction member 52 has with two distal ends 53, wherein the distal ends 53 are connected to the actuating member 36 and to a mounting flange 74 of the mounting column 68. The actuating member 36 is advantageously provided with a first mounting flange 40, to which a distal end of the traction member 52 connects. The traction members thus strive to pull the actuating member 36 down (in the direction of compression of the air chambers) and the compression mechanism strive to push the actuating member up (in the direction of inflation of the air chambers). The actuating member 36 thus simulates the up- and down-chest (sternum) movements of a person. The counteracting compression and traction mechanisms advantageously provide the actuating member with an equilibrium position that better simulates the rest position of patient than a system comprising only one biasing mechanism. Moreover, in embodiments provided with the traction regulation and compression regulation mechanisms, the equilibrium position can be modified, and /or the tactile feedback forces may be adjusted to calibrate the device and/or to adjust for different pathological or physiological characteristics.

Tactical feedback received by an operator includes the resistance which is needed to move the chest and the auditory output of the section of the air entry conduit that simulates the collapse of the upper respiratory tract. Feedback may also include information provided by a data processing unit receiving inputs from various sensors integrated in the thorax simulation device and/or the mannequin, such sensors including for instance airflow sensors, chest pressure sensors, air chamber pressure sensors, actuation member displacement and velocity sensors. The thorax simulation device 4 thus responds when an operator is pressing against the tactile feedback actuation system 8 by introducing and expelling air through the air transfer system and into the chambers 25 of the air containing system 6. In the illustrated embodiment, the traction members 52 are tension springs. However, it is also possible have other forms of traction springs, for instance the traction member may be made from a resilient material such as a rubber band.

In a preferred embodiment, the tactile feedback actuation system 8 is provided with a compression force adjustment mechanism 72. The force F required to compress the actuating member 36 is the resultant of the tension force *Ft* in the tension member and the compression force Fc of the compression mechanism. In a preferred embodiment of the invention, the traction force regulating mechanism 72 comprises a mounting flange to which an end of the traction spring is connected. The traction force regulating mechanism 72 comprises a guide rail 70 mounted on the mounting column 68 and a complementary guide rail 76 on the mounting flange. The height of the mounting flange relative to the base and thus to the actuating member 38 is thus adjustable in order to adjust the traction force of the traction spring.

The measuring system comprises sensors, configured to measure the flows, pressures, timings and displacements of the sternum. The measuring unit 78 is configured to process the input from the sensors in order to evaluate the performance of the simulated CPR by the force and frequency of the applied operator impulses.

The flow measuring system comprises a flow sensor in the orifice 12 of the air transfer system 7. The flow sensor may independently measure the air flow (l/hr) that is introduced and expelled to and from the air containing system 6. Additionally, the flow measurement system may comprise a second flow sensor arranged on a conduit from the air chamber.

The displacement of the actuating member 36 can be calculated from the maximum and minimum volume of the air chamber. Additionally or alternatively, the displacement of the actuating member 36 can be measured by a position sensor or a displacement sensor, such as a transducer, potentiometer or any other commonly used displacement.

The thorax simulation device 4 may optionally comprise a user interface such as a display device. However other types of user interfaces such as sound feedback system and voice messages are possible. The user interface enables the operator to better understand in real time and/or after a performed session on the accuracy and efficiency of the CPR.

The timing unit measures the frequency and duration of the CPR activity.

As previously described, the artificial lung mechanism can be used either as an internal component located within a training device such as a mannequin 1, or be used as a separate unit without user interface for the purpose of testing CPR machines.

### List of references

Mannequin 1
   External envelope 90
      Casing 92
      Artificial tissue 94
      Head 96
         Head pivoting mechanism 98
         Nose 100
         Mouth 102
Thorax simulation device 4
   Air transfer system 7
      Orifice 12
      Supply conduit 15
      Branching connection 17
      Air entry conduit 104
         Flexible tubular member 105
   Air containing system 6
      First group of chambers 22
      Second group of chambers 24
         air chambers 26
   Tactile feedback actuation system 8
      Actuating member 36
         Contact plate 38
            First mounting flange 40
         Guide 43
         Air chamber actuating mechanism 42
            Movement transferring plate 44
            Chamber interconnecting bar 48
            Rest volume adjustment mechanism 51
               Adjustment screw 57
      Reciprocating arrangement 14
         Traction mechanism 52
            Spring 53 (coil spring)
            Traction force regulating mechanism 72
               Mounting flange 74
                  Complementary guide rail 76
         Compression mechanism (gas piston) 54
            Compression regulating mechanism 55
            Piston chamber 56
            Fluid channel (not illustrated in figs.) 58
               Piston head 60
               Piston rod 62
               Piston guiding member 63
                  Resilient end stop 64
         Base 16
            Guiding socket 45
            Base plate 66
            Mounting column 68
               Guide rail 70
      Control and Measuring system 10
         Measuring unit 78
         Measuring arrangement 80
            Pressure sensor
            Volume sensor
            Displacement sensor
            Stomach end 88

## Claims

1. A thorax simulation device (4) comprising a base (16), an air containing system (6) containing a volume of air, an air transfer system (7) and a tactile feedback actuation system (8) comprising a movable actuating member (36) and a reciprocating arrangement (14), the actuating member being operationally coupled to the air containing system by a chamber actuating mechanism (42) configured to change the air volume within the air containing system as a function of the displacement of the actuating member, wherein the reciprocating arrangement comprises a traction mechanism (52) configured to apply a traction force on the actuating member, and a compression mechanism (54) configured to apply a compression force on the actuating member, the compression force and traction force acting in opposite directions.

2. The device according to claim 1, wherein the traction mechanism comprises a traction spring (53) and a traction regulation mechanism configured to adjust the force of the traction spring.

3. The device according to the preceding claim, wherein the traction regulation mechanism comprises a mounting flange comprising a complementary guide rail slideably coupled to a guide rail of a mounting column of the base.

4. The device according to any preceding claim, wherein the compression mechanism comprises a gas piston.

5. The device according to the preceding claim, wherein the compression mechanism is configured to dampen the reciprocating movement of the actuating member.

6. The device according to any preceding claim, wherein the compression mechanism comprises a compression force regulating mechanism, configured to adjust the compression force of the compression mechanism.

7. The device according to the preceding claim in conjunction with claim 4, wherein the compression force regulating mechanism comprises a gas supply and valve connected to the gas piston configured to pump gas into, respectively release gas out of the gas piston.

8. The device according to any preceding claim, wherein the air transfer system further comprises an air entry conduit (104) comprising a tubular member (105) with a collapsible flexible wall portion configured to produce a variable restricted air flow into the air containing system to simulate collapse of the upper respiratory tract during inhalation.

9. The device according to any preceding claim, wherein the air containing system includes at least two variable volume air chambers arranged in a first group and a second group.

10. The device according to the preceding claim, wherein the first and second group each comprise at least two variable volume air chambers.

11. The device according to the preceding claim, wherein the first group is positioned on a right side, and the second group on a left side.

12. The device according to any preceding claim, wherein the chamber actuating mechanism comprises a rest volume adjustment mechanism (51) configured to vary a volume of the air chambers when the air chambers are at rest.

13. The device according to the preceding claim, wherein a left side of the device and a right side of the device each comprises one of said chamber actuating mechanism, the chamber actuating mechanisms being independently adjustable

14. The device according to either of the two directly preceding claims, wherein the rest volume adjustment mechanism comprises a movement transferring plate (44), an extension (45) and adjustment screw (57).

15. A thorax simulation device (4) comprising a base (16), an air containing system (6) containing a volume of air, an air transfer system (7) and a tactile feedback actuation system (8) comprising a movable actuating member (36) and a reciprocating arrangement (14), the actuating member being operationally coupled to the air containing system by a chamber actuating mechanism (42) configured to change the air volume within the air containing system as a function of the displacement of the actuating member, wherein the air transfer system comprises an air entry conduit (104), said air entry conduit comprises a tubular member (105) with a collapsible flexible wall portion configured to produce a variable restricted air flow into the air containing system to simulate collapse of the upper respiratory tract during inhalation.
